# FASCICULE DE BREVET EUROPEEN

(11) **EP 1 302 684 B1**
(45) Date de publication et mention de la délivrance du brevet: **23.02.2011**
(21) Numéro de dépôt: 02020360.0
(22) Date de dépôt: 12.09.2002
(51) Int. Cl.: F16D 1/06

(54) **Dispositif d'accouplement en rotation de deux arbres télescopiques**
Drehverbindungseinrichtung für zwei teleskopische Wellen
Rotational coupling device for two telescopic shafts

(30) Priorité: 15.10.2001 FR 0113297
(43) Date de publication de la demande: 16.04.2003
(73) Titulaire: NACAM France S.A., 41000 Vendome (FR)
(72) Inventeur: Barnley, Peter, Ebbw Vale, NP23 6TP, Gwent (GB); Richards, Paul, NP22 4P, Gwent Wales (GB); Lacaille, Christophe, B60 4DX, Worcs, (GB)
(74) Mandataire: Bloch & Bonnétat

(56) Documents cités:
- EP-A- 0 814 012
- DE-A- 3 248 148
- DE-A- 10 113 826
- US-A- 4 222 246
- US-A- 4 828 423

## Description

L'invention se rapporte à un dispositif d'accouplement en rotation de deux arbres télescopiques suivant leur axe commun. Le dispositif d'accouplement de l'invention s'applique notamment à une colonne de direction de véhicule automobile, en l'adoptant à la partie intermédiaire de colonne reliée au boîtier de direction, ou à la partie haute de colonne reliée au volant de direction.

Dans le cas plus particulier de l'axe intermédiaire, celui-ci a un cardan à chaque extrémité : un cardan est relié à l'entrée de mouvement du boîtier de direction, et l'autre cardan est relié au haut de colonne. Pour avoir une direction correcte des véhicules automobiles actuels, il est nécessaire que la longueur de l'axe intermédiaire soit variable et s'adapte aux oscillations du train avant du véhicule, qui sont dues au profil et à l'état de surface du revêtement de la route.

L'axe intermédiaire doit donc avoir tout d'abord une longueur variable, c'est-à-dire qu'il doit présenter une fonction de coulissement de deux arbres l'un par rapport à l'autre suivant leur axe commun, qui est l'axe de la partie intermédiaire. De plus, il faut une fonction transmission du mouvement de rotation entre les deux arbres, et du couple de rotation nécessaire à la manoeuvre de la direction.

Il existe de nombreux dispositifs d'accouplement d'arbre coulissants, qui transmettent le couple de rotation entre les deux arbres par l'utilisation de cannelures, qui sont aménagées respectivement sur les deux arbres avec des profils conjugués.

Cependant ce type de dispositif présente des difficultés de réalisation pour avoir d'une part une raideur angulaire suffisante et d'autre part un effort axial de déplacement suffisamment précis lors d'un choc.

Il est également connu des dispositifs de liaison en rotation comme celui décrit dans le brevet européen EP-A-0 814 012, qui se rapporte à une liaison en rotation par frottement entre un arbre intérieur et un arbre extérieur qui ne peuvent pas coulisser l'un par rapport à l'autre ; l'arbre extérieur étant relié à un moteur électrique d'assistance et l'arbre intérieur à un écrou d'un système vis-écrou appartenant à une crémaillère de direction.

Le but de la présente invention est de proposer un dispositif d'accouplement d'arbres télescopiques qui évite les inconvénients précédents, c'est-à-dire un dispositif qui en fonctionnement normal fonctionne sans aucun jeu, et qui en fonctionnement exceptionnel puisse transmettre le très fort couple de rotation. De plus, il faut que le dispositif d'accouplement des deux arbres puisse se monter facilement dans les espaces possibles existants sur les véhicules automobiles.

L'invention se rapporte à un dispositif d'accouplement en rotation de deux arbres aptes à tourner suivant un axe commun. L'un des deux arbres est un arbre intérieur et l'autre arbre est un arbre extérieur, les deux arbres étant disposés de manière à pouvoir coulisser l'un dans l'autre suivant ledit axe commun.

Selon l'invention, le dispositif d'accouplement comporte :
- une première liaison en rotation entre les deux arbres, qui est constituée par un système de frottement en rotation aménagé entre l'arbre intérieur et l'arbre extérieur, et
- une deuxième liaison en rotation entre les deux arbres, qui est constituée par des cannelures internes et par des cannelures externes, les cannelures internes étant aménagées à la périphérie de l'extrémité de l'arbre intérieur et les cannelures externes étant aménagées sur la face interne du tube constituant l'arbre extérieur, les cannelures internes et les cannelures externes étant agencées de manière à coopérer les unes avec les autres afin que pour un couple de rotation normal à transmettre, la transmission s'effectue par frottement, et qu'en cas de couple de rotation exceptionnel à transmettre, la transmission s'effectue en plus au moyen des cannelures après rattrapage du jeu entre les cannelures.

Selon un mode de réalisation particulièrement avantageux de l'invention, la première liaison en rotation entre l'arbre intérieur et l'arbre extérieur comporte une bague ressort qui constitue le système de frottement en rotation ; ladite bague ressort s'appliquant d'une part sur la face interne d'un logement de l'arbre extérieur, et s'appliquant d'autre part sur une portion lisse ou moletée de la face externe de l'arbre intérieur.

Dans ce type de réalisation, une architecture très intéressante de la bague ressort est la suivante. Ladite bague ressort est une bague métallique qui a une fente sur toute sa longueur axiale. Ladite bague métallique comporte sur toute sa longueur circulaire des alvéoles axiales internes et des alvéoles axiales externes. Les alvéoles sont alternées afin d'avoir une alvéole axiale externe qui soit consécutive à une alvéole axiale interne. Les alvéoles axiales externes s'appliquent sur la face interne d'un logement aménagé dans l'arbre extérieur, et les alvéoles axiales internes s'appliquent sur la portion lisse ou moletée de la face externe de l'arbre intérieur.

De plus, le dispositif d'accouplement selon l'invention peut comporter une liaison axiale entre l'arbre intérieur et l'arbre extérieur.

Dans ce cas, la liaison axiale entre l'arbre intérieur et l'arbre extérieur est réalisée par le système de frottement en rotation, qui est agencé de manière à résister à une valeur prédéterminée du glissement axial entre l'arbre intérieur et l'arbre extérieur.

Afin d'améliorer encore les performances du dispositif d'accouplement selon l'invention, ledit dispositif comporte un système de butée axiale dans un seul sens, afin d'empêcher l'extraction de l'arbre intérieur dans le sens de l'axe commun. Ledit système de butée axiale comporte une bague torique qui est disposée dans un logement aménagé à l'extrémité de l'arbre extérieur, et qui est maintenu dans le sens de l'axe commun par un rabattement du type sertissage de ladite extrémité de l'arbre extérieur sur la bague torique, ladite bague torique s'appliquant sur la portion lisse de la face externe de l'arbre intérieur.

Le dispositif d'accouplement selon l'invention s'applique soit à la partie intermédiaire d'une colonne de direction de véhicule automobile, soit à la partie haute d'une colonne de direction de véhicule automobile.

Le dispositif d'accouplement en rotation de deux arbres télescopiques présente ainsi l'avantage de permettre le passage du couple de rotation sans aucun jeu dans les conditions normales de fonctionnement, et de garantir le passage du couple de rotation dans les conditions exceptionnelles de fonctionnement. Enfin, le dispositif d'accouplement peut se monter facilement dans l'encombrement existant des colonnes de direction de véhicule automobile.

D'autres caractéristiques et avantages de la présente invention apparaîtront plus clairement à la lecture de la description suivante de plusieurs réalisations préférées de l'invention en référence aux dessins annexés correspondants dans lesquels :
- la figure 1 est une vue schématique en perspective d'une direction de véhicule automobile, dans laquelle le dispositif d'accouplement de l'invention s'applique à la partie intermédiaire de colonne ;
- la figure 2 est une vue en perspective du dispositif d'accouplement selon l'invention ;
- la figure 3 est une coupe suivant un plan passant par l'axe commun des deux arbres du dispositif d'accouplement représenté sur la figure 2;
- la figure 4 est une vue en perspective de la bague ressort représentée sur les figures 2 et 3 ;
- la figure 5 est une coupe transversale suivant le plan V-V de la figure 3.

L'invention se rapporte à un dispositif d'accouplement en rotation de deux arbres télescopiques.

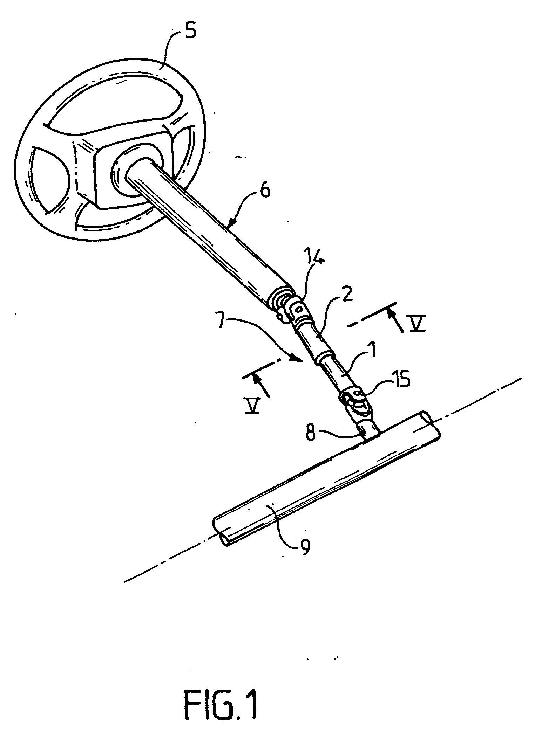

Ce dispositif d'accouplement s'applique particulièrement bien à une direction de véhicule automobile, comme celle qui est représentée schématiquement sur la figure 1.

La direction représentée comporte une colonne de direction avec une partie haute de colonne 6 appelée aussi haut de colonne, et une partie intermédiaire de colonne 7 appelée aussi axe intermédiaire.

La partie haute de colonne 6 est reliée par son extrémité supérieure au volant de direction 5, et par son extrémité inférieure à la partie intermédiaire de colonne 7.

La partie intermédiaire de colonne 7 est reliée par son extrémité supérieure à la partie haute de colonne 6, et par son extrémité inférieure au boîtier de direction 8 de la tige de direction 9.

Les extrémités opposées de la partie intermédiaire de colonne 7 sont reliées respectivement au moyen d'une articulation en joint de cardan 14 à la partie haute de colonne 6, et au moyen d'une articulation en joint de cardan 15 au boîtier de direction 8.

Dans ce qui suit, la description se rapporte à un dispositif d'accouplement qui est inclus dans la partie intermédiaire de colonne 7. Le dispositif d'accouplement de l'invention peut également être inclus dans la partie haute de colonne 6.

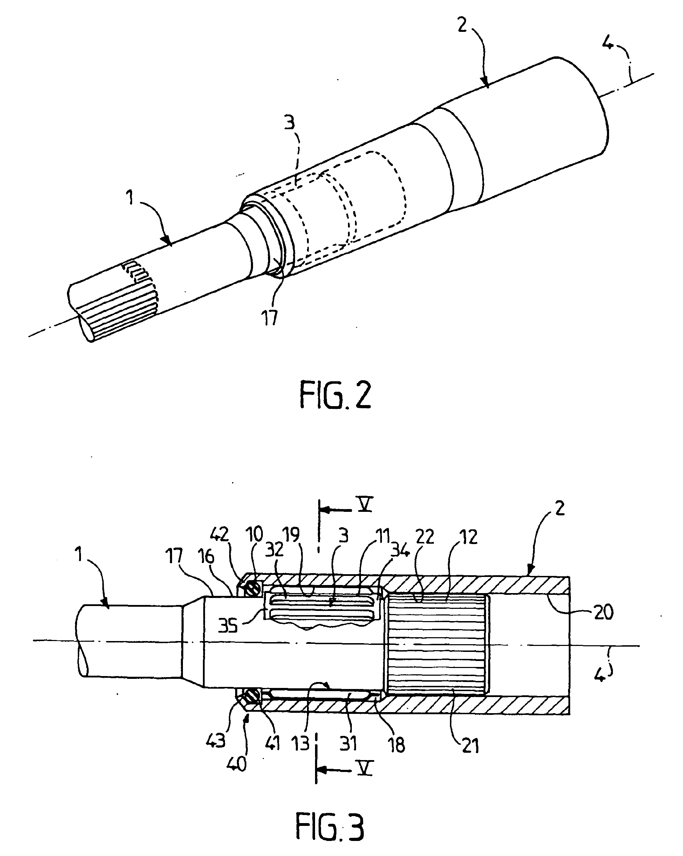

Les figures 2 et 3 représentent la partie intermédiaire de colonne 7, avec le principe du dispositif d'accouplement en rotation de deux arbres télescopiques selon l'invention.

Un arbre intérieur 1 et un arbre extérieur tubulaire 2 coulissent l'un dans l'autre suivant la direction de leur axe commun 4, qui est représenté sur les figures 2 et 3.

Dans la suite de la description, le terme "intérieur" ou "interne" se réfère à un élément qui est le plus proche de l'axe commun 4, et le terme "extérieur" ou "externe" se réfère à un élément qui est le plus éloigné dudit axe commun 4.

Plus précisément, l'invention se rapporte à un dispositif d'accouplement en rotation de deux arbres aptes à tourner suivant un axe commun 4. L'un des deux arbres est un arbre intérieur 1 et l'autre arbre est un arbre extérieur 2, les deux arbres 1 et 2 étant disposés de manière à pouvoir coulisser l'un dans l'autre suivant ledit axe commun 4.

Selon l'invention, le dispositif d'accouplement comporte :
- une première liaison 11 en rotation entre les deux arbres 1 et 2, qui est constituée par un système de frottement en rotation aménagé entre l'arbre intérieur 1 et l'arbre extérieur 2 ; et
- une deuxième liaison 12 en rotation entre les deux arbres 1 et 2, qui est constituée par des cannelures internes 21 et par des cannelures externes 22, les cannelures internes 21 étant aménagées à la périphérie de l'extrémité de l'arbre intérieur 1 et les cannelures externes 22 étant aménagées sur la face interne du tube constituant l'arbre extérieur 2 ; les cannelures internes 21 et les cannelures externes 22 étant agencées de manière à coopérer les unes avec les autres.

Le dispositif de l'invention est réalisé afin que pour un couple de rotation normal à transmettre, il est transmis par frottement, et qu'en cas de couple de rotation exceptionnel à transmettre, il est transmis en plus au moyen des cannelures après rattrapage du jeu entre lesdites cannelures.

La première liaison en rotation entre l'arbre intérieur 1 et l'arbre extérieur 2 comporte une bague ressort 3 qui constitue le système de frottement en rotation, ladite bague ressort 3 s'appliquant d'une part sur la face interne 19 d'un logement 18 aménagé dans l'arbre extérieur 2, et s'appliquant d'autre part sur une portion lisse 16 de la face externe 17 de l'arbre intérieur 1. Dans une autre réalisation de l'invention, la bague ressort 3 s'applique d'une part sur la face interne 19 du logement 18 aménagé dans l'arbre extérieur 2, et s'applique d'autre part sur une portion moletée 16 de la face externe 17 de l'arbre intérieur 1.

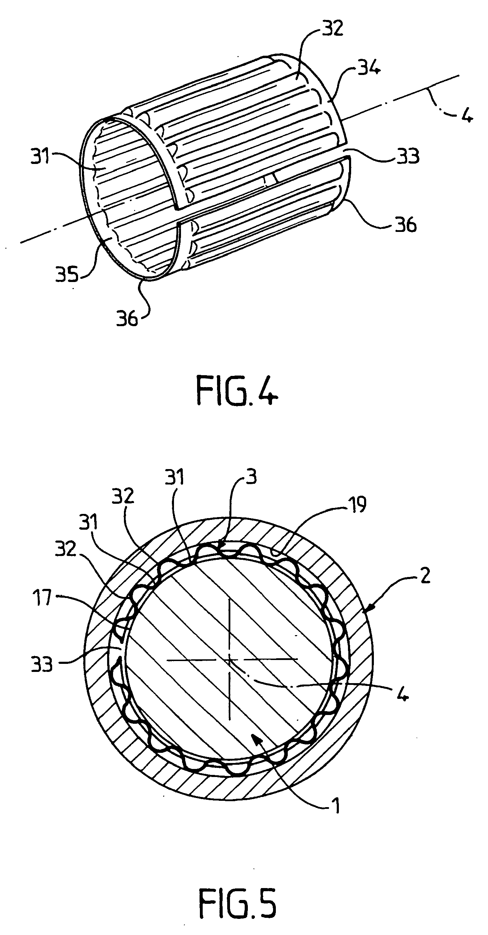

Comme on peut le voir sur les figures 3, 4 et 5, la bague ressort 3 est une bague métallique qui a une fente 33 sur toute sa longueur axiale. Ladite bague métallique 3 comporte sur toute sa longueur circulaire 36 des alvéoles axiales internes 31 et des alvéoles axiales externes 32. Les alvéoles sont alternées afin qu'une alvéole axiale externe 32 soit consécutive à une alvéole axiale interne 31. Les alvéoles axiales externes 32 s'appliquent sur la face interne 19 du logement 18 aménagé dans l'arbre extérieur 2, et les alvéoles axiales internes 31 s'appliquent sur la portion lisse 16 de la face externe 17 de l'arbre intérieur 1.

De plus, le dispositif d'accouplement selon l'invention comporte une liaison axiale 13 entre l'arbre intérieur 1 et l'arbre extérieur 2. Ladite liaison axiale 13 entre l'arbre intérieur 1 et l'arbre extérieur 2 est réalisée par le système de frottement en rotation, qui est agencé de manière à résister à une valeur prédéterminée du glissement axial entre l'arbre intérieur 1 et l'arbre extérieur 2.

Le dispositif d'accouplement selon l'invention comporte également un système de butée axiale 40 dans un seul sens, afin d'empêcher l'extraction de l'arbre intérieur 1 dans le sens de l'axe commun 4. Ledit système de butée axiale 40 comporte une bague torique 10 qui est disposée dans un logement 41 aménagé à l'extrémité 42 de l'arbre extérieur 2. Ladite bague torique 10 est maintenue dans le sens de l'axe commun par un rabattement 43 du type sertissage de ladite extrémité 42 de l'arbre extérieur 2 sur la bague torique 10. Ladite bague torique 10 s'applique d'autre part sur la portion lisse 16 de la face externe 17 de l'arbre intérieur 1.

## Revendications

1. Dispositif d'accouplement en rotation de deux arbres aptes à tourner suivant un axe commun (4), l'un des deux arbres étant un arbre intérieur (1) et l'autre arbre étant un arbre extérieur (2), les deux arbres (1 et 2) étant disposés de manière à pouvoir coulisser l'un dans l'autre suivant ledit axe commun (4), **caractérisé en ce qu'**il comporte :
- une première liaison (11) en rotation entre les deux arbres (1 et 2), qui est constituée par un système de frottement en rotation aménagé entre l'arbre intérieur (1) et l'arbre extérieur (2) ; et
- une deuxième liaison (12) en rotation entre les deux arbres (1 et 2), qui est constituée par des cannelures internes (21) et par des cannelures externes (22), les cannelures internes (21) étant aménagées à la périphérie de l'extrémité de l'arbre intérieur (1) et les cannelures externes (22) étant aménagées sur la face interne du tube constituant l'arbre extérieur (2), les cannelures internes (21) et les cannelures externes (22) étant agencées de manière à coopérer les unes avec les autres afin que pour un couple de rotation normal à transmettre, la transmission s'effectue par frottement, et qu'en cas de couple de rotation exceptionnel à transmettre, la transmission s'effectue en plus au moyen des cannelures après rattrapage du jeu entre lesdites cannelures.

2. Dispositif d'accouplement selon la revendication 1, **caractérisé en ce que** la première liaison en rotation entre l'arbre intérieur (1) et l'arbre extérieur (2) comporte une bague ressort (3) qui constitue le système de frottement en rotation, ladite bague ressort (3) s'appliquant d'une part sur la face interne (19) d'un logement (18) aménagé dans l'arbre extérieur (2), et s'appliquant d'autre part sur une portion lisse (16) de la face externe (17) de l'arbre intérieur (1).

3. Dispositif d'accouplement selon la revendication 1, **caractérisé en ce que** la première liaison en rotation entre l'arbre intérieur (1) et l'arbre extérieur (2) comporte une bague ressort (3) qui constitue le système de frottement en rotation, ladite bague ressort (3) s'appliquant d'une part sur la face interne (19) d'un logement (18) aménagé dans l'arbre extérieur (2), et s'appliquant d'autre part sur une portion moletée (16) de la face externe (17) de l'arbre intérieur (1).

4. Dispositif d'accouplement selon la revendication 2 ou 3, **caractérisé en ce que** la bague ressort (3) est une bague métallique qui a une fente (33) sur toute sa longueur axiale, ladite bague métallique (3) comportant sur toute sa longueur circulaire (36) des alvéoles axiales internes (31) et des alvéoles axiales externes (32), qui sont alternées afin d'avoir une alvéole axiale externe (32) qui soit consécutive à une alvéole axiale interne (31), les alvéoles axiales externes (32) s'appliquant sur la face interne (19) du logement (18) aménagé dans l'arbre extérieur (2), et les alvéoles axiales internes (31) s'appliquant sur ladite portion (16) de la face externe (17) de l'arbre intérieur (1).

5. Dispositif d'accouplement selon l'une quelconque des revendications précédentes, **caractérisé en ce qu'**il comporte une liaison axiale (13) entre l'arbre intérieur (1) et l'arbre extérieur (2).

6. Dispositif d'accouplement selon la revendication 5, **caractérisé en ce que** la liaison axiale (13) entre l'arbre intérieur (1) et l'arbre extérieur (2) est réalisée par le système de frottement en rotation, qui est agencé de manière à résister à une valeur prédéterminée du glissement axial entre l'arbre intérieur (1) et l'arbre extérieur (2).

7. Dispositif d'accouplement selon l'une quelconque des revendications précédentes, **caractérisé en ce qu'**il comporte un système de butée axiale (40) dans un seul sens, afin d'empêcher l'extraction de l'arbre intérieur (1) dans le sens de l'axe commun (4).

8. Dispositif d'accouplement selon la revendication 7, **caractérisé en ce que** le système de butée axiale (40) comporte une bague torique (10) qui est disposée dans un logement (41) aménagé à l'extrémité (42) de l'arbre extérieur (2), et qui est maintenu dans le sens de l'axe commun par un rabattement (43) du type sertissage de ladite extrémité (42) de l'arbre extérieur (2) sur la bague torique (10), ladite bague torique (10) s'appliquant sur une portion lisse (16) de la face externe (17) de l'arbre intérieur (1).

9. Dispositif d'accouplement selon l'une quelconque des revendications précédentes, **caractérisé en ce qu'**il s'applique à la partie
intermédiaire (7) d'une colonne de direction de véhicule automobile.

10. Dispositif d'accouplement selon l'une quelconque des revendications 1 à 8, **caractérisé en ce qu'**il s'applique à la partie haute (6) d'une colonne de direction de véhicule automobile.

## Claims

1. A device for rotationally coupling two shafts able to turn about a common axis (4), one of the two shafts being an interior shaft (1) and the other shaft being an exterior shaft (2), the two shafts (1 and 2) being arranged so that they can slide one within the other along said common axis (4), **characterized in that** it includes:
- a first rotational coupling (11) between the two shafts (1 and 2) and which is constituted by a rotation friction system disposed between the interior shaft (1) and the exterior shaft (2); and
- a second rotational coupling (12) between the two shafts (1 and 2) and which is constituted by internal splines (21) and external splines (22), the internal splines (21) being located on the periphery of the end of the interior shaft (1) and the external splines (22) being located on the internal face of the tube constituting the exterior shaft (2), the internal splines (21) and the external splines (22) being adapted to cooperate with each other so that if a normal rotation torque is to be transmitted it is transmitted by friction, and if an exceptional rotation torque is to be transmitted it is additionally transmitted by means of the splines after taking up clearance between said splines.

2. A coupling device according to claim 1, **characterized in that** the first rotational coupling between the interior shaft (1) and the exterior shaft (2) includes a resilient ring (3) which constitutes the rotation friction system, said resilient ring (3) on the one hand being pressed onto the internal face (19) of a housing (18) located in the exterior shaft (2) and on the other hand being pressed onto a smooth portion (16) of the external face (17) of the interior shaft (1).

3. A coupling device according to claim 1, **characterized in that** the first rotational coupling between the interior shaft (1) and the exterior shaft (2) includes a resilient ring (3) which constitutes the rotation friction system, and said resilient ring (3) on the one hand being pressed onto the internal face (19) of a housing (18) located in the exterior shaft (2) and on the other hand being pressed onto a knurled portion (16) of the external face (17) of the interior shaft (1).

4. A coupling device according to claim 2 or 3, **characterized in that** the resilient ring (3) is a metal ring which has a slit (33) over the whole of its axial length, said metal ring (3) having over the whole of its circular length (36) internal axial recesses (31) and external axial recesses (32) which alternate so that an external axial recess (32) follows on from an internal axial recess (31), the external axial recesses (32) being pressed onto the internal face (19) of the housing (18) located in the exterior shaft (2), and the internal axial recesses (31) being pressed onto the smooth portion (16) of the external face (17) of the interior shaft (1).

5. A coupling device according to any one of previous claims, **characterized in that** it includes an axial coupling (13) between the interior shaft (1) and the exterior shaft (2).

6. A coupling device according to claim 5, **characterized in that** the axial coupling (13) between the interior shaft (1) and the exterior shaft (2) is effected by the rotation friction system which is adapted to resist to a predetermined value of the axial sliding between the interior shaft (1) and the exterior shaft (2).

7. A coupling device according to any one of previous claims, **characterized in that** it includes a one-way axial abutment system (40) to prevent extraction of the interior shaft (1) in the direction of the common axis (4).

8. A coupling device according to claim 7, **characterized in that** the axial abutment system (40) includes a toroidal ring (10) which is disposed in a housing (41) located at the end (42) of the exterior shaft (2), and which is retained in the direction of the common axis by a crimping folding (43) at said end of the exterior shaft (2) on the toroidal ring (10), said toroidal ring (10) being pressed onto a smooth portion (16) of an external face (17) of the interior shaft (1).

9. A coupling device according to any one of previous claims, **characterized in that** it is applied onto the intermediate part (7) of an automobile vehicle steering column.

10. A coupling device according to claims 1 to 8, **characterized in that** it is applied onto the top part (6) of an automobile vehicle steering column.

## Patentansprüche

1. Drehkupplungsvorrichtung für zwei Wellen, die in der Lage sind, sich an einer gemeinsamen Achse (4) entlang zu drehen, wobei eine der beiden Wellen eine innere Welle (1) und die andere Welle eine äußere Welle (2) ist, wobei die beiden Wellen (1 und 2) derart angeordnet sind, dass sie ineinander an der gemeinsamen Achse (4) entlang gleiten können, **dadurch gekennzeichnet, dass** sie Folgendes umfasst:
- eine erste Drehverbindung (11) zwischen den beiden Wellen (1 und 2), die aus einem Drehreibungssystem besteht, das zwischen der inneren Welle (1) und der äußeren Welle (2) eingerichtet ist; und
- eine zweite Drehverbindung (12) zwischen den beiden Wellen (1 und 2), die aus internen Riefen (21) und aus externen Riefen (22) besteht, wobei die internen Riefen (21) am Rand der inneren Welle (1) und die externen Riefen (22) auf der Innenseite der Röhre, welche die äußere Welle (2) bildet, eingerichtet sind, wobei die internen Riefen (21) und die externen Riefen (22) derart angeordnet sind, dass sie miteinander zusammenwirken, damit für ein zu übertragendes normales Drehmoment die Kraftübertragung durch Reibung erfolgt, und dass im Falle eines zu übertragenden außergewöhnlichen Drehmoments die Kraftübertragung zudem mittels der Riefen nach Spielausgleich zwischen den Riefen erfolgt.

2. Kupplungsvorrichtung nach Anspruch 1, **dadurch gekennzeichnet, dass** die erste Drehverbindung zwischen der inneren Welle (1) und der äußeren Welle (2) einen Federring (3) umfasst, der das Drehreibungssystem bildet, wobei der Federring (3) einerseits an der Innenseite (19) einer Aufnahme (18) anliegt, die in der äußeren Welle (2) eingerichtet ist, und andererseits an einem glatten Abschnitt (16) der Außenseite (17) der inneren Welle (1) anliegt.

3. Kupplungsvorrichtung nach Anspruch 1, **dadurch gekennzeichnet, dass** die erste Drehverbindung zwischen der inneren Welle (1) und der äußeren Welle (2) einen Federring (3) umfasst, der das Drehreibungssystem bildet, wobei der Federring (3) einerseits an der Innenseite (19) einer Aufnahme (18) anliegt, die in der äußeren Welle (2) eingerichtet ist, und andererseits an einem gerändelten Abschnitt (16) der Außenseite (17) der inneren Welle (1) anliegt.

4. Kupplungsvorrichtung nach Anspruch 2 oder 3, **dadurch gekennzeichnet, dass** der Federring (3) ein Metallring ist, der einen Schlitz (33) über seine gesamte Axiallänge aufweist, wobei der Metallring (3) auf seiner gesamten Kreislänge (36) interne Axialzellen (31) und externe Axialzellen (32) umfasst, die sich abwechseln, um eine externe Axialzelle (32) aufzuweisen, die auf eine interne Axialzelle (31) folgt, wobei die externen Axialzellen (32) an der Innenseite (19) der Aufnahme (18) anliegen, die in der äußeren Welle (2) eingerichtet ist, und die internen Axialzellen (31) an dem Abschnitt (16) der Außenseite (17) der inneren Welle (1) anliegen.

5. Kupplungsvorrichtung nach einem der vorhergehenden Ansprüche, **dadurch gekennzeichnet, dass** sie eine Axialverbindung (13) zwischen der inneren Welle (1) und der äußeren Welle (2) umfasst.

6. Kupplungsvorrichtung nach Anspruch 5, **dadurch gekennzeichnet, dass** die Axialverbindung (13) zwischen der inneren Welle (1) und der äußeren Welle (2) durch das Drehreibungssystem ausgebildet ist, das angeordnet ist, um einem vorherbestimmten Wert des Axialgleitens zwischen der inneren Welle (1) und der äußeren Welle (2) zu widerstehen.

7. Kupplungsvorrichtung nach einem der vorhergehenden Ansprüche, **dadurch gekennzeichnet, dass** sie ein Axialanschlagsystem (40) in einer Richtung umfasst, um das Herausziehen der inneren Welle (1) in Richtung der gemeinsamen Achse (4) zu verhindern.

8. Kupplungsvorrichtung nach Anspruch 7, **dadurch gekennzeichnet, dass** das Axialanschlagsystem (40) einen O-Ring (10) umfasst, der in einer Aufnahme (41) angeordnet ist, die an dem Ende (42) der äußeren Welle (2) eingerichtet ist, und die in Richtung der gemeinsamen Achse durch einen Umschlag (43) nach Art einer Crimpverbindung des Endes (42) der äußeren Welle (2) auf den O-Ring (10), gehalten wird, wobei der O-Ring (10) an einem glatten Abschnitt (16) der Außenseite (17) der inneren Welle (1) anliegt.

9. Kupplungsvorrichtung nach einem der vorhergehenden Ansprüche, **dadurch gekennzeichnet, dass** sie an dem Zwischenteil (7) einer Kraftfahrzeug-Lenksäule anliegt.

10. Kupplungsvorrichtung nach einem der Ansprüche 1 bis 8, **dadurch gekennzeichnet, dass** sie an dem oberen Teil (6) einer Kraftfahrzeug-Lenksäule anliegt.
